# EUROPEAN PATENT APPLICATION

(11) **EP 4 741 129 A1**
(43) Date of publication of application: **13.05.2026**
(21) Application number: 25214540.4
(22) Date of filing: 10.11.2025
(51) Int. Cl.: B28D 1/24, B28D 7/04, B28D 1/00, B23Q 1/38, B23Q 3/06, B23Q 3/08

(54) **METHOD AND MACHINING CENTER FOR SHEETS**

(30) Priority: 12.11.2024 IT 202400025500
(71) Applicant: C.M.S. S.p.A., 24019 Zogno (BG) (IT)
(72) Inventor: GHISALBERTI, Oliviero, 24019 Zogno (BG) (IT)
(74) Representative: Luppi Intellectual Property S.r.l.

(57) **Abstract**

A method and a numerically controlled machining center for processing sheets are disclosed, in which a large sheet is positioned on locking devices arranged on a work surface of the machining center and is then cut with a cutting tool to obtain two or more sheet portions, and in which a numerically controlled manipulator laterally moves at least one sheet portion that adheres by suction to at least one underlying locking device that slides on the work surface supported by an air cushion until it stops the sheet portion, interrupting the air cushion and activating a suction that blocks the locking device to the work surface in a desired position in which the sheet portion is further processed by removing material.

## Description

### Background of the invention

The invention concerns a machining method and a machining center for processing sheets, particularly for processing sheets of marble or other stone materials, but also for glass sheets (for example, for cutting and grinding laminated glass) or sheets of metal, composite materials, wood, etc.

Specifically, but not exclusively, the invention can be applied in the kitchen and/or furniture manufacturing sector in general.

### Prior art

It is known that, in order to obtain all the pieces needed for the production of kitchen furniture or furnishings in general, two separate machines are used: a bridge saw to divide a large sheet of stone material using a cutting disc into various portions or sections of the sheet, which are then machined in a numerically controlled machining center with three or more machining axes to perform the typical machining operations of a machining center, such as milling, drilling, grinding, engraving, etc.

The prior art, however, has some limitations and drawbacks.

First, especially for small manufacturers with a relatively small work volume, purchasing two machines (a bridge saw and a machining center) may not be cost-effective, due to the impossibility of reaching or even approaching saturation of production capacity, leaving one or both machines unused even for long periods of the week.

Second, installing two separate machines, in addition to being expensive, requires relatively large amounts of space and could also lead to greater complications in the production process.

Another area that could be improved is reducing operator intervention in the production process by increasing its automation.

### Summary of the invention

An object of the invention is to provide a method and a machining center capable of overcoming one or more of the aforementioned limitations and drawbacks of the prior art.

An object is to perform operations typical of a bridge saw and a machining center within the same machine.

An advantage is to allow saturation of production capacity even in the case of relatively small work volumes.

An advantage is to provide a method and a machining center for performing various operations with high precision and efficiency.

Other advantages are to enable a production process with a considerable degree of automation and considerable versatility of use, as well as to make it possible to install the machinery necessary to perform a variety of operations while occupying little space and with a relatively small investment.

These objects and advantages, and others, are achieved by a method and a machining center according to one or more of the claims listed below.

In one example, a machining method comprises: positioning a sheet on a plurality of locking devices arranged on a work surface of a numerically controlled machining center; cutting the sheet using a numerically controlled cutting tool to obtain two or more sheet portions, each of which is arranged on one or more locking devices; moving laterally at least one of the sheet portions thus obtained using a numerically controlled manipulator by making the sheet portion adhere by suction to each locking device underneath the sheet portion and by sliding each underlying locking device on the work surface thanks to the generation of an air cushion until the sheet portion is stopped, interrupting the air cushion and activating a suction that blocks each underlying locking device on the work surface in a desired position in which the sheet portion will be further machined by removing material.

The proposed solution allows the use of a 3 or 4 or 5-axis controlled machining centre as if it were, in practice, a real bridge milling machine (equipped, in particular, with a manipulator), with the possibility of carrying out (in particular, with an automatic work cycle, with practically no intervention by personnel) both the cutting or sectioning of a sheet using a cutting tool (for example a disc), and the processes normally carried out by a numerically controlled machine (drilling, milling, boring, grinding, engraving, threading, etc.).

In particular, it is possible to use a cutting disc with a relatively small diameter, for example, a diameter of approximately 200 mm, which has sufficient cutting capacity to effectively process sheets with thicknesses from 10 mm to 60 mm. The cutting tool may be mounted on the work head of the numerically controlled machining center using an angular transmission.

Depending on the proposed solution, the machining center may include, in particular, two, or three, or four, or more than four manifolds for supplying vacuum to the various locking devices (suction cups) that serve to secure the sheet to be machined on the work surface by suction.

Each manifold may be configured, in particular, to supply pressurized air to the various locking devices to generate an air cushion (at the lower end of each locking device, i.e., between each locking device and the work surface) to facilitate, when necessary, the sliding of the locking devices (and therefore of the sheet portion placed above the locking devices themselves) on the work surface.

Each manifold may be configured, in particular, to supply pressurized air to the various locking devices to generate an air cushion (at the upper end of each locking device, i.e., between each locking device and the sheet above) to facilitate, when necessary, the sliding of the sheet on the locking devices.

Each manifold may comprise, in particular, at least two outlets for the operating fluid, each of which may be connected to an end (upper or lower) of a locking device (suction cup).

In particular, it is possible to provide that each locking device has an upper end, intended to create an operational interface with the sheet being processed and connected to a respective manifold outlet, and a lower end, intended to create an operational interface with the work surface and also connected to a respective manifold outlet.

Each manifold may be equipped, in particular, with switching means to manage both the generation of vacuum for the locking action in the operational interfaces between the locking device and the sheet or work surface, and the generation of an air blast to form an air cushion in the same upper or lower operational interfaces between the locking device and, respectively, the sheet or work surface. The switching means may be configured to select the desired function (vacuum or air cushion) independently between the upper and lower operating interfaces for each locking device, so that it will be possible, for example, to simultaneously activate the vacuum function at the upper operating interface (locking the sheet) and the air cushion function at the lower operating interface (sliding on the work surface), or to simultaneously activate the vacuum function at the upper operating interface (locking the sheet) and the vacuum function also at the lower operating interface (locking on the work surface), or to simultaneously activate the air cushion function at the upper operating interface (sliding the sheet) and the vacuum function at the lower operating interface (locking on the work surface).

In particular, it is possible to provide that the connection of the various locking devices (suction cups) to the various manifolds may be calculated automatically by software, such as on-board machine software.

Each locking device may be configured, in particular, to generate a vacuum (locking action by suction) at the upper operating interface (locking the sheet) and also at the lower operating interface (locking on the work surface).

Each locking device may be configured, in particular, to generate an air cushion (sliding action) at least at the lower operating interface (sliding on the work surface, particularly useful when distancing a sectioned portion of the sheet from the rest of the sheet to facilitate subsequent processing).

In the specific example that will be described in greater detail below, each locking device may be configured to generate an air cushion (sliding action) also at the upper operating interface (sliding of the sheet on the locking devices, particularly useful in the initial positioning phase of the sheet on the work surface).

The method in question may provide that, once the various locking devices (suction cups) have been positioned on the work surface and once the sheet has been positioned above the locking devices (possibly using the air cushion generated at the upper end of the locking devices to facilitate positioning of the sheet), a processing cycle may begin in automatic sequence.

The processing cycle may start, in particular, with a cutting of the sheet using a cutting tool mounted (in particular with the interposition of an angular transmission) on the work head of the numerically controlled machining center.

Once the cut has been performed, with the consequent separation of a portion of the sheet from the rest, the processing cycle may include the automatic removal of a special aggregate from the tool magazine. This aggregate consists of a manipulator configured to move the sheet portion, in particular by means of a suction grip (suction cup).

This aggregate (manipulator), rather than being available in the tool magazine, could be mounted directly on the work head of the machining center (for example, on the side of the head, or on the front of the head), in particular arranged on a slider or shuttle that moves between a rest position (in which it does not interfere with the other machining operations of the work head) and a working position (in which it can operate to pick up the sheet portion and move it on the work surface using the machining axes of the work head with which it is integral). The aforementioned slider or shuttle may be movable, in particular, under the control of a pneumatic actuator.

The aggregate (manipulator), mounted on the work head, may be positioned on the upper surface of the sheet and may grip the sheet by suction. The suction may be generated, in particular, by a Venturi-effect suction device mounted on the aggregate itself.

Once the manipulator has grasped the sheet portion, the automatic processing cycle may continue by removing the vacuum function, at the lower operating interface with the work surface, only from the group of locking devices that support the sheet portion separated from the rest of the sheet (by intervening with the respective manifold operationally associated with that specific group of locking devices) and by activating, again at the lower operating interface with the work surface of that specific group of locking devices, the air cushion function by sending pressurized air, in such a way as to facilitate the sliding on the work surface of the specific group of locking devices, together with the sheet portion held in grip by suction by means of the upper operating interfaces (which remain activated in vacuum mode) of the same group of locking devices.

When the air cushion is activated, which allows the locking devices supporting the sheet portion to float and promote its sliding on the work surface, the air pressure may slightly lift the assembly consisting of the sheet portion and the respective locking devices underneath. This lifting may be enabled by a certain flexibility of the manipulator, for example, elastic flexibility achieved, in particular, by elastic means that support a gripping element of the manipulator that interacts in contact with the sheet portion. In a specific example, the manipulator may allow, for example, a lifting of the assembly of approximately 1 mm or 1.5 mm.

At this point, the manipulator, carried by the work head, may move horizontally by a programmed amount so as to distance the sheet portion from the rest of the sheet and thus facilitate subsequent processing. It should be noted that, to perform the aforementioned movement of the sheet portion to distance it from the rest of the sheet, the manipulator, carried by the workhead, essentially does not have to support the weight of the sheet portion, as it is supported by the air cushion generated under the various locking devices (suction cups). In practice, the effort exerted by the work head during this movement of the sheet portion is minimal.

Once the sheet portion has been positioned in the desired location, the operations may be performed in reverse; that is, the air cushion under the suction cups is stopped and the vacuum under the suction cups is reactivated. Furthermore, the manipulator may be stored in the tool magazine or returned to a rest position.

The subsequent phases of the automatic operating cycle may include, in particular, the cutting of other portions of the sheet using the cutting tool and the possible spacing of the sheet portions thus obtained, for example in a manner substantially similar to that described above, by activating the various collectors operationally associated with the respective groups of locking devices that support, from time to time, the various sheet portions being separated.

The automatic operating cycle may include, in particular, that each individual sheet portion obtained is machined with the tools normally used by a numerically controlled machining center (drilling, grinding, milling tools, etc., possibly including 90° and 45° angle drives as needed).

The result is a set of finished pieces that may be collected and removed from the machining center, together with the processing waste. It should be noted that some types of processing waste (for example, waste generated by sink machining) may be removed using the same manipulator used to laterally move the sheet portions cut by the cutting tool.

The various locking devices (suction cups) may then be repositioned for the next sheet work cycle.

In the specific example, which will be described in detail later in the description, four manifolds have been provided to handle four sheet portions obtained from a large sheet. However, a different number of manifolds may be provided, depending on the requirements, for example, three manifolds, five manifolds, six manifolds, or even more than six.

### Brief description of the drawings

The invention may be better understood and implemented with reference to the attached drawings, which illustrate a non-limiting example of implementation, in which:

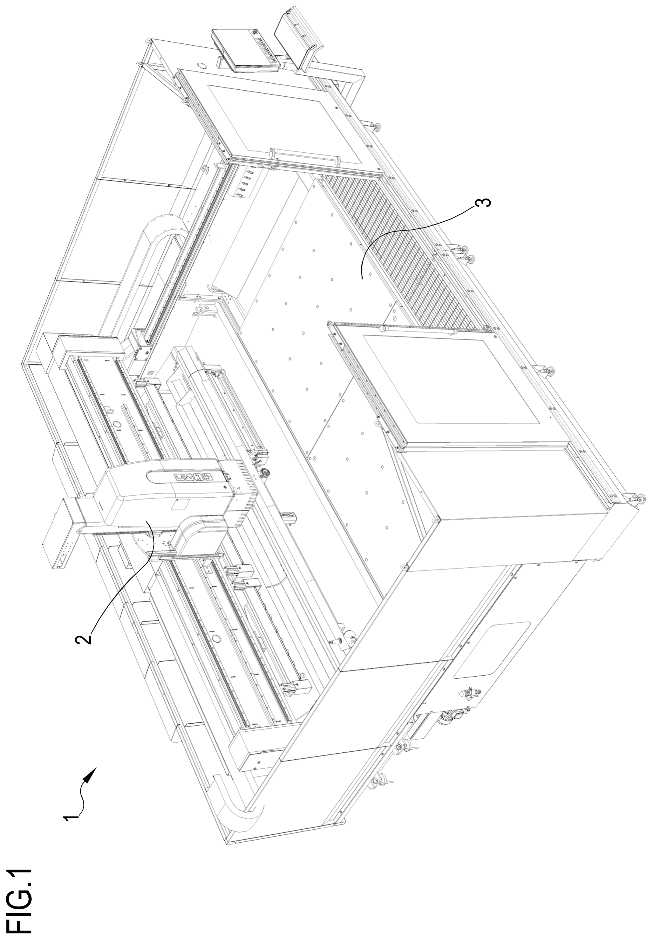

Figure 1 is a perspective view of an example of a machining center constructed in accordance with the present invention;

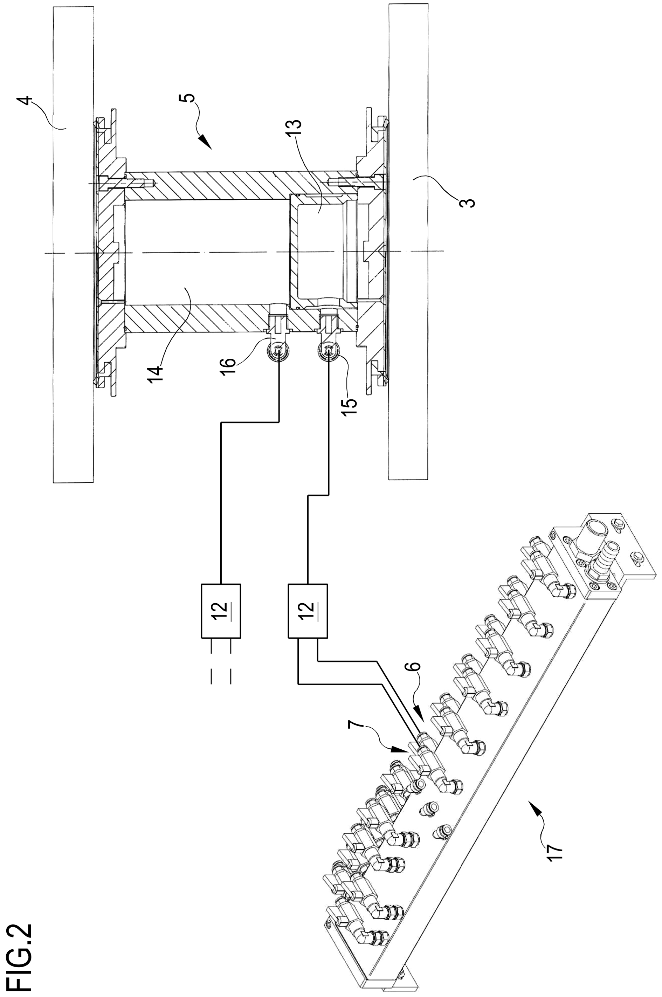

Figure 2 shows a locking device connected to a manifold and used in the machining center of Figure 1;

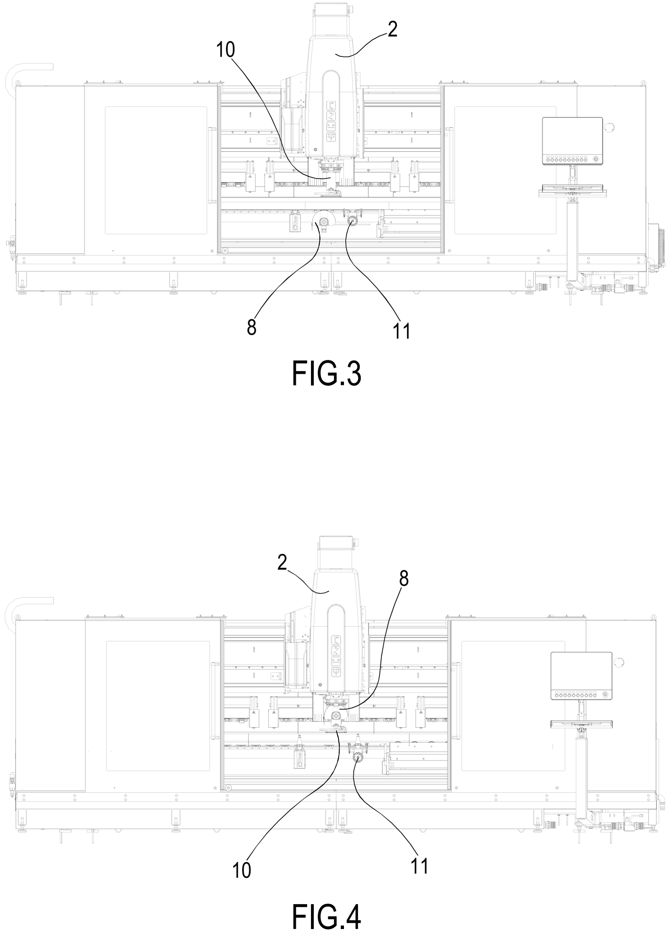

Figure 3 is a vertical front elevation view of the machining center of Figure 1 with a suction cup manipulator coupled to the work head;
Figure 4 is the front view of Figure 3, in which an angular transmission for a cutting tool (disc) has been coupled to the work head;

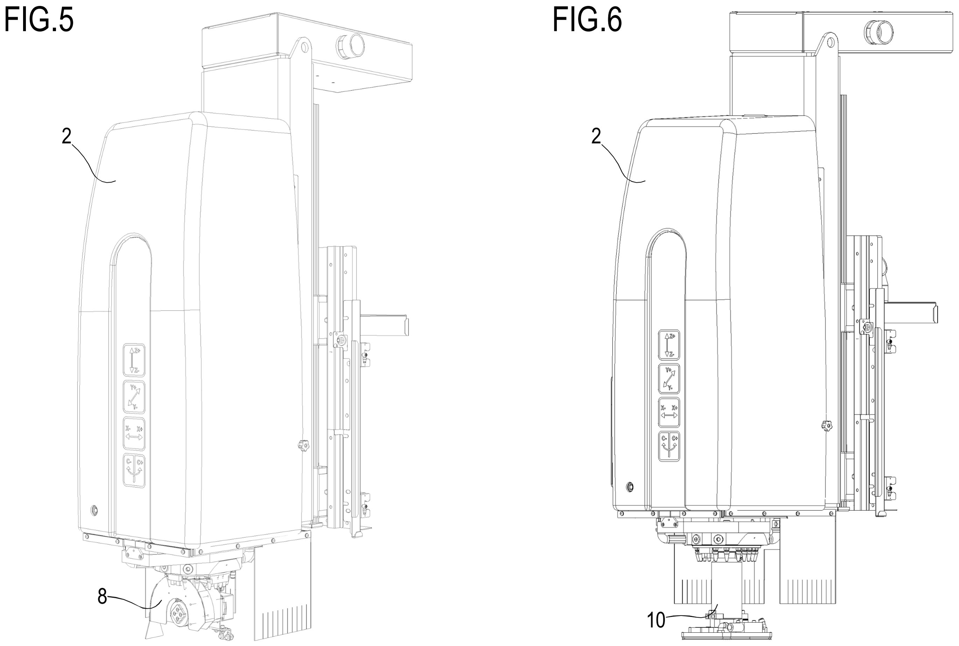

Figure 5 is a perspective view of the work head of the machining center of Figure 1 with the angular transmission for the cutting tool coupled;
Figure 6 is a perspective view of the work head of the machining center of Figure 1 with the suction cup manipulator coupled;
Figure 7 is a view of the suction cup manipulator shown in Figure 6;
Figures 8 to 16 show, in plan view from above, several sequential stages of a processing method implemented using the machining center shown in Figure 1, which involves the formation of four distinct pieces from a single sheet (specifically, a marble slab used to form kitchen units);
Figure 17 is a perspective view of the stage shown in Figure 16.

### Detailed description

With reference to the above figures, the reference number 1 generally indicates a machining center for processing sheets, in particular for processing slabs of marble or other stone materials, but also for glass sheets (for example, for cutting and grinding laminated glass) or metal, composite materials, wood, etc. The machining center 1 may be used, in particular, in the kitchen production sector and/or in the furniture production sector in general. The machining center 1 may include, in particular, a numerically controlled machining center.

The machining center 1 includes at least one movable work head 2 with three or more controlled axes. It is possible, in particular, to provide that the numerical control of the machining center 1 is equipped with at least four or five controlled axes (typically three linear axes X, Y, Z and a rotary axis C).

The machining center 1 comprises a horizontal work surface 3 configured for positioning a sheet 4 to be machined using the work head 2. The sheet 4 may comprise, in particular, a sheet of glass, marble, stone, composite material, or another material.

The machining center 1 comprises a plurality of locking devices 5 (suction cups) that may be positioned on the work surface 3 and configured to support the sheet 4 to be machined. Each locking device 5 may comprise, in particular, a locking member having an upper end that can be coupled with the sheet 4 and a lower end that can be coupled with the work surface 3. The work surface 3 extends on a (continuous) horizontal plane so that each locking device 5 can be moved and positioned on the work surface along at least two mutually orthogonal horizontal directions (width and length of the horizontal plane), in particular with the possibility of movement on the (continuous) horizontal plane in any horizontal direction. The work surface 3 may be, in particular, a fixed plane. The work surface 3 may be configured, in particular, to define a continuous horizontal support plane. The work surface 3 may comprise, in particular, a work table.

The machining center 1 comprises suction means 6 connected to the locking member to generate suction at the aforementioned upper and lower ends of the respective locking member. The suction means 6 may comprise, in particular, one or more pipe connections and at least one actuator (vacuum pump) in turn connected to the aforementioned one or more connections.

The machining center 1 comprises blowing means 7 connected to the locking member to generate an air cushion at least at the aforementioned lower end of the respective locking member. The blowing means 7 may comprise, in particular, one or more pipe connections and at least one actuator (compressor) in turn connected to the aforementioned one or more connections.

The machining centre 1 comprises at least one cutting tool 8 (for example a cutting disc) which may be associated with the work head 2 (in particular, which may be engaged with, and disengaged from, the work head 2, for example automatically by means of a tool change system) and which is configured to divide the sheet 4, supported by the locking devices 5, into two or more sheet portions 9 separated from each other in such a way that each sheet portion 9 obtained from the aforementioned division of the single sheet 4 is arranged on at least one of the aforementioned locking devices 5. The cutting tool 8 operates with a rotary cutting motion around a horizontal rotation axis and with a horizontal feeding motion to divide the sheet 4 along horizontal cutting lines. The cutting tool 8 may be picked up, in particular, from a tool magazine of the machining center 1.

The machining center 1 includes handling means configured to move at least one of the sheet portions 9 into which the sheet 4 has been divided by the cutting tool 8. The handling means may include, as in this specific example, a manipulator 10.

In other examples not illustrated, the handling means may include, in particular, a tool (for example, a rod) that may be used manually by an operator to move the sheet portions 9, or the locking devices 5 could be self-propelled, in which case the handling means will include motor means operationally associated with the locking devices 5 that may be equipped with wheels or tracks or other means capable of allowing their autonomous movement that may be guided by the numerical control of the machining center.

The manipulator 10 may comprise, in particular, vacuum gripping means (for example, by means of the Venturi effect). The manipulator 10 may be, in particular, an aggregate that can be removed from the tool magazine of the machining centre 1. The manipulator 10 may be, in other examples, an aggregate permanently mounted on the work head 2, for example with a lateral arrangement with respect to the work head 2 or with a frontal arrangement with respect to the work head 2, in particular with the possibility of performing a movement with respect to the work head 2 (for example, the manipulator 10 may be mounted on a slide or cursor or shuttle arranged on the work head) between a rest position (of non-interference with other machining operations) and a working position, for example by means of a pneumatic movement device.

The machining center 1 comprises at least one tool 11 that may be associated with the work head 2 (in particular, that may be engaged with and disengaged from the work head 2, for example automatically by means of the tool change system for engagement and disengagement from the spindle of the work head 2) to machine the sheet portion(s) 9 with a process typical of a machining center, such as for example a milling tool and/or a drilling tool and/or a grinding tool and/or an engraving tool, etc. The tool magazine may be equipped with various tools suitable for carrying out various processes typical of a machining center (generally processes involving material removal) and which can be manipulated by the tool change system.

The machining center 1 comprises switching means 12 configured to selectively connect the lower end of each locking device 5 to the blowing means 7 and the suction means 6. The switching means 12 may comprise, in particular, a three-way selector valve.

The lower end of each locking device 5 is operatively connected to the suction means 6 independently of the upper end of the locking device 5.

The locking member may internally comprise two operating cavities 13 and 14 that are separate from each other. One of the aforementioned two operating cavities (lower cavity 13) of the locking member is connected to the lower end of the locking member while the other of the aforementioned two operating cavities (upper cavity 14) is connected to the upper end of the locking member.

The locking member may comprise, in particular, a respective air connection 15 or 16 for each of the two operating cavities 13 or 14. Each air connection 15 and 16 may be connected to the suction means 6 and the blowing means 7 by means of the switching means 12 and by means of a single flexible tube that may be used for both the blowing function (air cushion) and the suction function (locking). Each locking member may comprise, in particular, any of the locking members 3, 3', 3", 3‴ described in Italian patent application no. 102024000000384 which is hereby incorporated by reference.

It is possible to envisage, as in this specific example, that the machining centre 1 comprises two or more locking assemblies or groups, each of which may be operationally associated with a respective sheet portion 9 obtained by the division of the sheet 4 carried out by the cutting tool 8, wherein each locking assembly comprises one or more locking devices 5 (suction cups). In the specific example illustrated, each locking assembly comprises two or more locking devices 5. The machining centre 1 may comprise, as in this example, two or more manifolds 17 of the suction means 6 and the blowing means 7, wherein each manifold 17 is connected to a respective locking assembly so that the various locking assemblies are connected independently of one another to the suction means 6 and the blowing means 7 and may be operated independently to perform the relevant functions. The connection of the locking devices 5 to the various manifolds 17 may be calculated automatically by software, for example on-board machine software.

The operation of the numerically controlled machining center 1 may implement a machining method according to the present invention.

The machining method in question comprises the step of positioning two or more locking devices 5 on the work surface 3 of the machining center 1.

The processing method in question comprises the step of positioning a sheet 4 (for example, made of stone material) on the locking devices 5 and then cutting the sheet 4 with the cutting tool 8 carried by the work head 2 and controlled by the numerical control of the machining center 1 in such a way as to divide the sheet 4 into two or more separate sheet portions 9 in which each sheet portion 9 is placed on at least one of the aforementioned locking devices 5.

The method in question comprises the step of moving a sheet portion 9, previously obtained from the aforementioned division of a single sheet 4 into two or more sheet portions 9, on the work surface 3 by means of the manipulator 10 carried by the work head 2 and controlled by the numerical control. During this phase of moving the sheet portion 9, a suction is generated (by means of the manifold 17 associated with the locking assembly consisting of the locking device(s) 5 underneath the sheet portion 9) in the upper cavity 14 of the locking device(s) 5 underneath to make the sheet portion 9 adhere to the locking device(s) of the respective locking assembly, so that each locking device 5 adhering to the sheet portion 9 will in turn be moved together with the sheet portion 9. Furthermore, during this phase of moving the sheet portion 9, an air cushion is also generated (again by means of the same manifold 17 associated with the locking assembly underneath the sheet portion 9, in this case in each lower cavity 15) to facilitate sliding on the work surface 3 of each locking device 5 moved together with the sheet portion 9.

The method in question comprises the step of stopping the aforementioned movement of the sheet portion 9 so as to position the sheet portion 9 itself in a specific and desired position. The sheet portion 9 is then locked in the aforementioned desired position by interrupting the lower air cushion and making the relative locking assembly (the locking device(s) underneath the sheet portion 9) adhere to the work surface by suction. The transition from the air cushion function to the suction function always occurs using the same manifold 17 and by means of the switching means 12 associated with the manifold 17 itself.

The method in question comprises the step of machining the sheet portion 9, positioned in the aforementioned desired position and locked in that position, using at least one tool 11 controlled by the numerical control of the machining center 1 to perform one or more typical machining operations of a machining center to produce a finished product. If required, further processing may be performed using cutting tool 8.

As mentioned, during the cutting phase of a single sheet 4 to divide it into two or more separate sheet portions 9, cutting tool 8 may be carried by work head 2 of the machining center. In particular, cutting tool 8 may be connected to work head 2 (specifically, to the spindle of work head 2) by means of a bevel gear for cutting motion around a horizontal rotation axis.

As mentioned, during the phase of moving the sheet portion 9 to distance it from the rest of the sheet, the manipulator 10 may be carried by the same work head 2 that carries the cutting tool 8. The manipulator 10 may be activated by moving it from the rest position (retracted) to the working position (advanced).

During the phase in which the sheet portion 9 is machined after being separated and distanced from the rest of the sheet 4, the processing tool 11 may be carried by the same work head 2 that carries the manipulator 10, causing the latter to retreat from the working position to the rest position.

During the phase of moving the sheet portion 9 by means of the manipulator 10 to distance it from the rest of the sheet 4, it is possible, in particular, to generate a suction (for example by means of a Venturi effect device placed on board the manipulator 10 itself) to make the manipulator 10 adhere to the portion of the sheet 9.

During the phase of positioning the sheet 4 (of considerable dimensions to be divided into portions) on the various locking devices 5 previously arranged on the work surface 3 in a programmed manner, it is possible, in particular, to generate an air cushion (at the upper ends of the locking devices 5) to facilitate the sliding of the sheet 4 on the locking devices 5.

The preliminary phase of positioning the various locking devices 5 on the work surface 3 may include the operation of positioning three, or four, or more than four locking devices 5 on the work surface 3 (in this specific example, four locking assemblies in which locking assembly comprises at least two locking devices 5).

The step of cutting the sheet 4 into multiple sheet portions 9 may comprise the operation of cutting the sheet 4 in such a way as to divide the sheet 4 into three or four or more than four sheet portions 9 separated from each other such that each sheet portion 9 is arranged on at least one respective locking device 9 (in this specific example, four sheet portions 9 on four locking assemblies).

Each sheet portion 9 may be arranged on a respective locking assembly comprising one or more locking devices 5. Each locking assembly may be connected to a respective manifold 17 which in turn may be connected to the blowing means 7 to generate an air cushion (sliding function) and to the suction means 6 to generate a vacuum (locking function).

During the phase of moving the sheet portion 9 on the work surface 3 to move it laterally and distance it from the rest of the sheet 4, the suction means 6 may be operationally connected to the upper cavity 14 to generate the vacuum at the upper end of the locking device (piece locking) while the blowing means 7 may be operationally connected to the lower cavity 13 to generate the air cushion at the lower end (sliding on the surface).

During the phase of positioning the sheet 4 on the locking devices 5, the blowing means 7 may be connected to the upper end of the locking device (piece sliding on the locking devices 5) and the suction means 6 may be connected to the lower end (locking on the surface).

During the aforementioned phases of cutting the sheet 4 for the sheet portion(s) 9, of locking each sheet portion 9 and of machining each sheet portion 9, the suction means 6 may be connected to both the upper end (piece locking) and the lower end (surface locking) of the locking member.

The phase of locking the sheet portion 9 may comprise, in particular, the use of the switching means 12 configured to switch the connection of the lower end of the locking member from a connection with the blowing means 7 (air cushion sliding function) to a connection with the suction means 6 (suction cup locking function).

The lower end of each locking member is operatively connected to the blowing means 7 and the suction means 6 independently of the upper end of the locking member itself.

In particular, it is possible to provide that the machining center is equipped with a guidance system that may be used to instruct and guide an operator in the correct positioning of the locking devices 5 and/or in the correct connection of the locking devices 5 to the various manifolds 17.

This guidance system may include, in particular, light signaling means (for example, a laser projection system) configured to project light signals, for example, light signals on the work surface 3 at the points where the locking devices 5 are to be positioned.

This guidance system may include, in particular, software configured to reproduce images on a screen of a user interface (operator panel) of the machining center so that the operator is visually provided with the information and instructions necessary to perform the required operations.

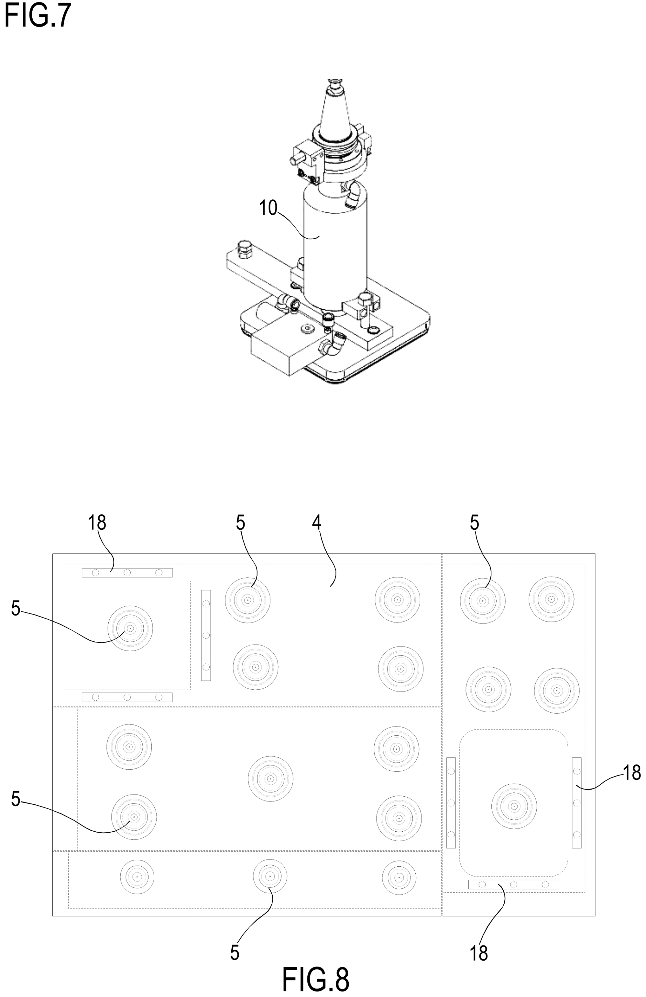

With reference to Figures 8 to 17, a sequence of phases of an example of a machining method implemented using the aforementioned machining center 1 is illustrated.

In Figure 8, the sheet 4 has been positioned on the various locking devices 5 that had previously been distributed on the work surface 3 in anticipation of the machining operations programmed on the sheet 4 itself. The figures with dashed lines indicate the machining lines along which the material removal is planned. As can be seen, the locking devices 5 have been prepared according to these machining operations.

In this example, the machining center 1 comprises at least four manifolds 17 and the set of locking devices 5 has been grouped into four subassemblies (locking assemblies) each of which is connected to a respective manifold 17. The four subassemblies of locking devices 5 (locking assemblies) are distributed so that each subassembly is positioned to support a respective sheet portion 9 which will subsequently be separated during the procedure by the cutting tool 8. Furthermore, the arrangement of specific supports 18 may be provided at the machining areas which foresee the formation of weakenings (cuts, openings, spaces, recesses, etc.) where additional support may be required.

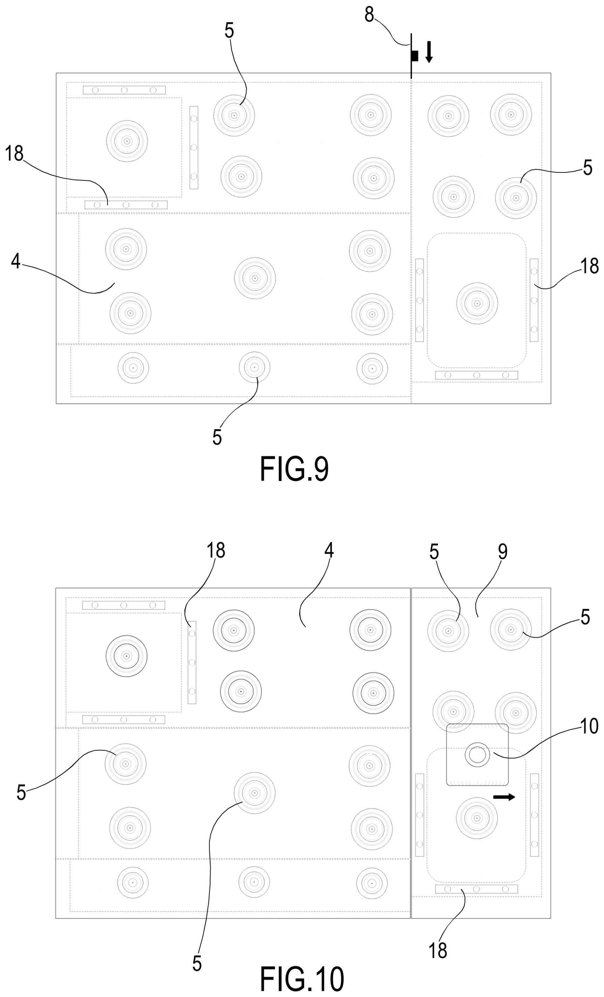

Figure 9 shows a subsequent cutting phase of sheet 4 performed by the cutting tool 8 to separate a first sheet portion 9.

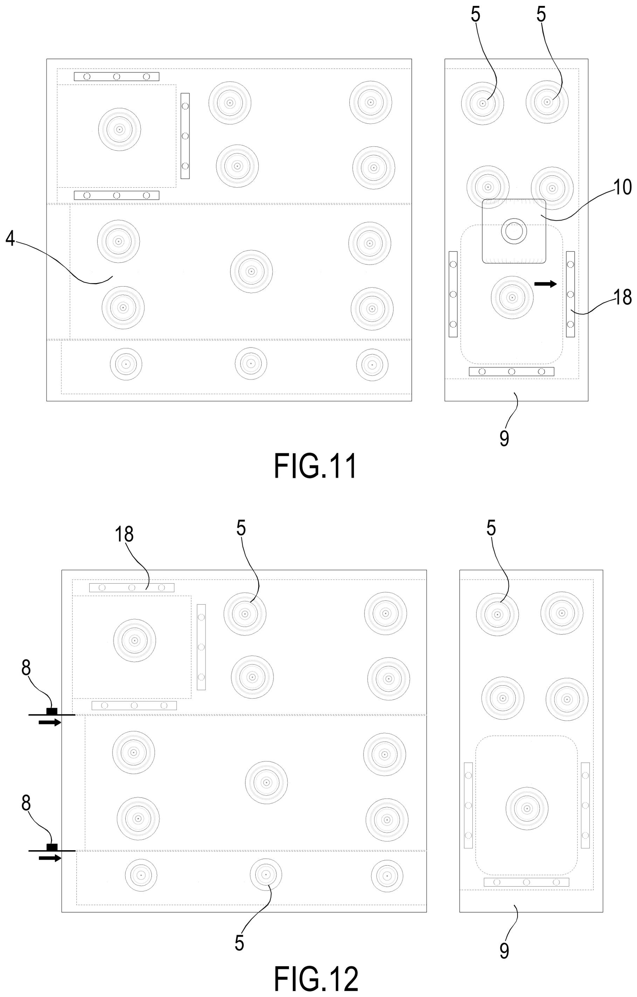

In Figure 10, the manipulator 10 has been positioned on the sheet portion 9 just separated from the rest of sheet 4, while Figure 11 shows the sheet portion 9 that has been moved laterally (to the right in the figure) by the manipulator 10 to distance the sheet portion 9 and facilitate subsequent processing.

Figure 12 shows the subsequent execution phases of two further cuts, again by the cutting tool 8 with a horizontal rotation axis and a horizontal cutting feed motion, so as to form the other three sheet portions 9 into which the initial sheet 4 is expected to be divided.

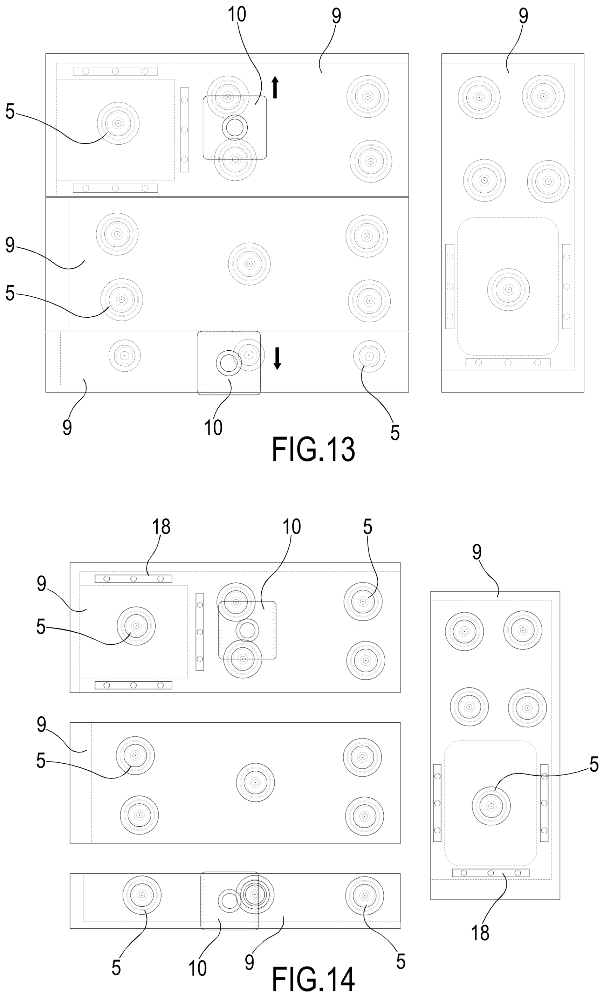

Figure 13 shows the two distinct phases of lateral movement of two sheet portions 9, again carried out by the manipulator 10. Figure 14 shows the two sheet portions 9 spaced laterally to facilitate subsequent machining operations.

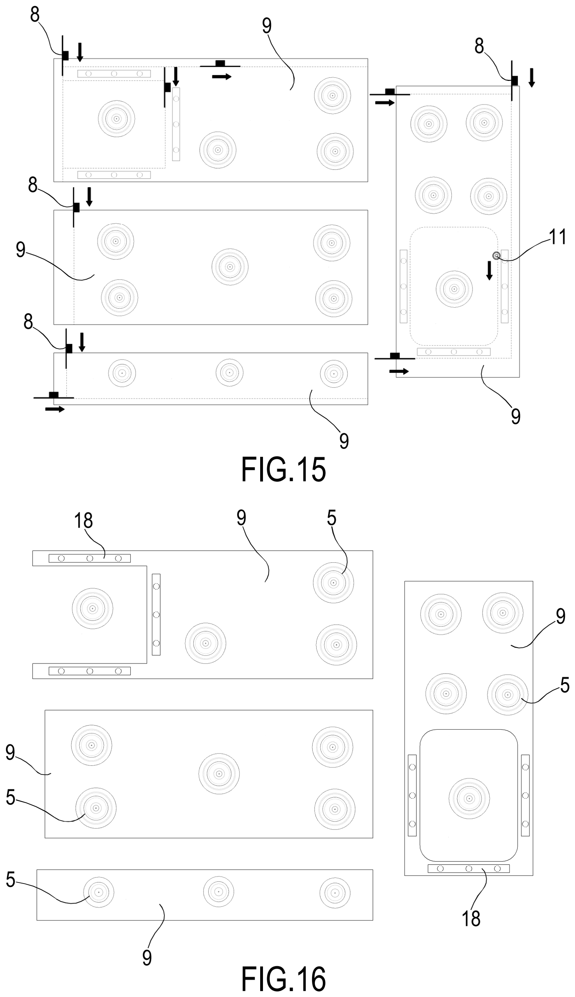

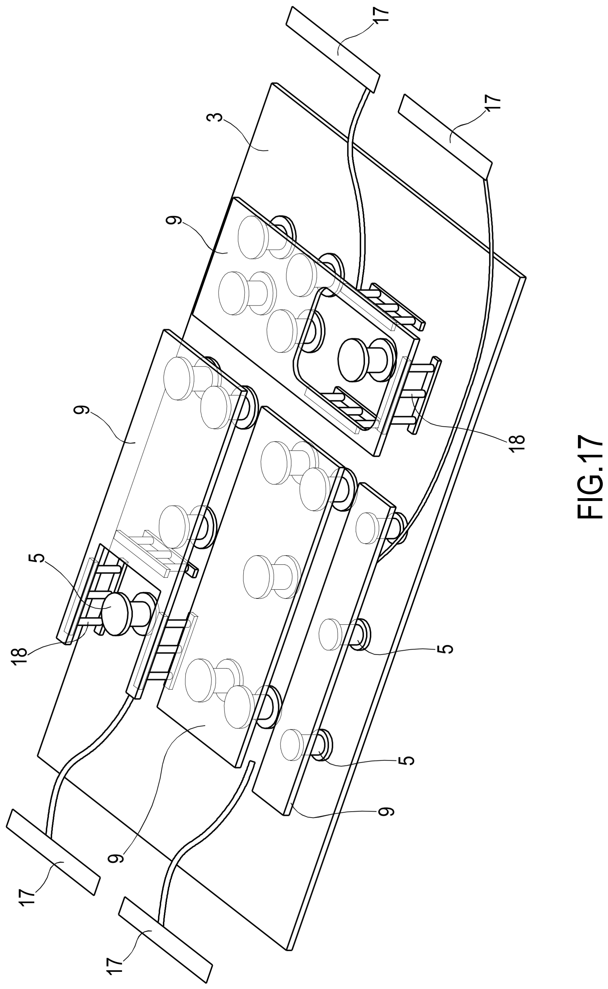

Figure 15 schematically shows the various machining operations that may be performed to obtain the four desired pieces, while Figures 16 and 17 show (in plan and perspective respectively) the four pieces obtained.

The various machining operations may be performed using the same work head 2 controlled by the numerical control, in particular using a tool change system with which the machining center 1 is equipped to engage and disengage from the work head 2 the various operating elements (cutting tool 8, manipulator 10, various tools 11 of the machining center 1) that must be used from time to time.

In other examples (not illustrated) it is possible to foresee the use of a machining centre with one or more further work heads controlled by the numerical control, in which case the numerical control may foresee the simultaneous execution of some operations, at least partially, so as to speed up the process.

## Claims

1. Machining method in a numerically controlled machining centre (1), said method comprising the following steps:
- positioning two or more locking devices (5) on a work surface (3) of said numerically controlled machining centre (1);
- positioning a sheet (4) on said locking devices (5);
- cutting said sheet (4) with a cutting tool (8) controlled by said numerically controlled machining centre (1) so as to divide said sheet (4) into two or more sheet portions (9) separated from each other in which each sheet portion (9) is arranged on at least one of said locking devices (5);
- moving one sheet portion (9), among said two or more sheet portions (9) obtained from said cutting step, on said work surface (3) by means of moving means, wherein during said moving step a gripping suction is generated to make said sheet portion (9) adhere to the respective locking device (5), whereby the respective locking device (5) is in turn moved together with said sheet portion (9), and furthermore an air cushion is generated to facilitate sliding of the respective locking device (5) on said work surface (3);
- stopping said moving so as to position said sheet portion (9) in a determined position;
- blocking said sheet portion (9) in said determined position by interrupting said air cushion and making said respective locking device (5) adhere by suction to said work surface (3);
- machining said sheet portion (9) in said determined position by means of a tool (11) controlled by said machining centre (1).

2. Method according to claim 1, wherein, during said cutting step, said cutting tool (8) is carried by a work head (2) of said machining centre; during said cutting step it being provided, in particular, that said cutting tool (8) is connected to said work head (2) by means of an angular transmission.

3. Method according to claim 2, wherein, during said moving step, said moving means is carried by said work head (2) and/or wherein, during said machining step, said tool (11) is carried by said work head (2).

4. Method according to any one of the preceding claims, wherein during said step of positioning a sheet (4), an air cushion is generated to facilitate sliding of the sheet (4) on said locking devices (5).

5. Method according to any one of the preceding claims, wherein, during said moving step, a gripping suction is generated to make said moving means adhere to said sheet portion (9); and/or.
wherein said positioning step comprises positioning three, or four, or more than four, locking devices (5) on said work surface (3) and said cutting step comprises cutting said sheet (4) so as to divide it into three, or four, or more than four, sheet portions (9) which are separated from each other and in which each sheet portion (9) is arranged on at least one respective locking device (5); and/or wherein each sheet portion (9) is arranged on a respective locking assembly comprising one or more of said locking devices (5), each locking assembly being connected to a respective manifold (17) in turn connected to blowing means (7) generating said air cushion and to suction means (6) generating said gripping suction.

6. Method according to any one of the preceding claims, wherein each of said locking devices (5) comprises a locking member with an upper end coupled with said sheet (4) or sheet portion (9) and a lower end coupled with said work surface (3); said locking member being connected to suction means (6) configured to generate said gripping suction; said locking member being connected to blowing means (7) configured to generate said air cushion.

7. Method according to claim 6, wherein, during said step of positioning a sheet (4), said blowing means (7) is connected to said upper end and said suction means (6) is connected to said lower end.

8. Method according to claim 6 or 7, wherein, during said moving step, said suction means (6) is connected to said upper end and said blowing means (7) is connected to said lower end; and/or
wherein, during said cutting, blocking and machining steps, said suction means (6) is connected to said upper end and said lower end; and/or
wherein said blocking step comprises the use of switching means (12) switching the connection of said lower end from a connection with said blowing means (7) to a connection with said suction means (6).

9. Method according to any one of claims 6 to 8, wherein said lower and upper ends are operatively connected to said blowing means (7) and to said suction means (6) independently of each other.

10. Method according to any one of the preceding claims, wherein, during said moving step, said moving means is controlled by said numerically controlled machining centre (1); said moving means comprising, in particular, a manipulator (10).

11. Numerically controlled machining centre, comprising:
- a movable work head (2) with three or more controlled axes;
- a work surface (3) configured for positioning a sheet (4) to be machined by said work head (2);
- two or more locking devices (5) positionable on said work surface (3) and configured to receive the sheet (4), each of which comprises a locking member with an upper end that is couplable with the sheet (4) and a lower end that is couplable with the work surface (3);
- suction means (6) connected to said locking member to generate suction in said upper and lower ends;
- blowing means (7) connected to said locking member to generate an air cushion at least in said lower end;
- at least one cutting tool (8) associable with said work head (2) to divide the sheet (4) received by said two or more locking devices (5) into two or more sheet portions (9) separated from each other in such a way that each sheet portion (9) is arranged on at least one of said locking devices (5);
- moving means configured to move at least one sheet portion (9) into which the sheet (4) has been divided by said cutting tool (8);
- a tool (11) associable with said work head (2) to machine the sheet portion (9) with a typical machining operation of a machining centre, such as for example milling and/or drilling and/or grinding and/or engraving.

12. Machining centre according to claim 11, wherein said locking member internally comprises two operative cavities (13; 14) separated from each other, each of said two operative cavities (13; 14) being connected to a respective one of said upper and lower ends.

13. Machining centre according to claim 12, wherein said locking member comprises an air connection (15; 16) for each of said two operating cavities (13; 14), each air connection (15; 16) being connected to said suction means (6) and to said blowing means (7) by means of switching means (12) and by means of a single flexible hose usable for both blowing and suction.

14. Machining centre according to any one of claims 11 to 13, wherein said machining centre comprises switching means (12) configured to selectively connect said lower end with said blowing means (7) and with said suction means (6); and/or wherein said lower end and said upper end are operatively connected to said suction means (6) independently of each other; and/or wherein said machining centre comprises two or more locking assemblies each of which is operably associable with a respective sheet portion (9), each of said two or more locking assemblies comprising one or more of said locking devices (5), said machining centre (1) comprising two or more manifolds (17) connected to said suction means (6) and to said blowing means (7), each of said two or more manifolds (17) being connected to a respective locking assembly such that said two or more locking assemblies are independently connected from one another to said suction means (6) and to said blowing means (7).

15. Machining centre according to any one of claims 11 to 14, comprising electronic and programmable control means configured to control said moving means; wherein said moving means comprises, in particular, a manipulator (10); said manipulator (10) comprising, in particular, vacuum gripping means by means of the Venturi effect.

16. Machining centre according to claim 15, wherein said manipulator (10) is an aggregate that can be removed from a tool magazine of said machining centre (1) and/or wherein said manipulator (10) is mounted on said work head (2) with the possibility of carrying out a movement with respect to said work head (2), for example by means of a slide or cursor, between a rest position and a working position, for example by means of a pneumatic movement device.
